(19) Europäisches Patentamt
European Patent Office
Office européen des brevets

(11) **EP 4 772 265 A1**

(12) **EUROPEAN PATENT APPLICATION**
published in accordance with Art. 153(4) EPC

(43) Date of publication:
**08.07.2026 Bulletin 2026/28**

(21) Application number: **24859120.8**

(22) Date of filing: **24.06.2024**

(51) International Patent Classification (IPC):
**B01D 53/22** (2006.01)    **C01B 3/56** (2006.01)

(52) Cooperative Patent Classification (CPC):
**B01D 53/22; C01B 3/56**

(86) International application number:
**PCT/JP2024/022767**

(87) International publication number:
**WO 2025/047074 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023   JP 2023139443**

(71) Applicant: **Hitachi, Ltd.
Tokyo 100-8280 (JP)**

(72) Inventors:
• **WATANABE, Ayumi
Tokyo 100-8280 (JP)**

• **YASHIKI, Tatsurou
Tokyo 100-8280 (JP)**
• **ISHIDA, Naoyuki
Tokyo 100-8280 (JP)**
• **KAWAHARA, Yohei
Tokyo 100-8280 (JP)**
• **KIM, Eunkyeong
Tokyo 100-8280 (JP)**
• **IIZUKA, Hidehiro
Tokyo 100-8280 (JP)**
• **INAGAKI, Ryohei
Tokyo 100-8280 (JP)**

(74) Representative: **Mewburn Ellis LLP
Aurora Building
Counterslip
Bristol BS1 6BX (GB)**

(54) **GAS SEPARATION SYSTEM**

(57)    The present invention provides a gas separation system capable of supplying hydrogen gas to a consumer at a low equipment cost. The gas separation system according to the present invention includes gas separation devices (5) and a gas separation system management unit (11). Each of the gas separation devices (5) includes a gas acquisition unit (7) that acquires a mixed gas (4), a gas separation unit (8) that separates a gas to be used by a consumer (6) and a gas to be returned to a pipeline (1) from the mixed gas (4) using a hydrogen separation membrane, a gas supply unit (9) that supplies the consumer (6) with the gas to be used by the consumer (6), which has been separated by the gas separation unit (8), a gas discharge unit (10) that discharges the gas to be returned, and a measuring instrument (12) that measures a physical quantity of the gas. The gas separation system management unit (11) stores information about the consumer (6), and has an output item configured according to the type and application of the gas to be used by the consumer (6). The output item is a physical quantity of the gas output from the gas separation device (5). The measuring instrument (12) is installed at a different location and measures a different output item depending on the type and application of the gas to be used by the consumer (6).

*FIG. 1A*

**Description**

TECHNICAL FIELD OF THE INVENTION

The present invention relates to a gas separation system that separates hydrogen from a hydrogen-containing mixed gas.

BACKGROUND ART

The Ministry of the Environment launched a "Demonstration Project for the Production of Renewable Energy Electrolytic Hydrogen and the Supply and Utilization of Hydrogen Mixed Gas" in 2019 (https://www.env.go.jp/press/ 106873.html). In this project, hydrogen is produced by electrolysis of water using electricity generated by wind power, the hydrogen is mixed with a simulated gas equivalent to city gas to produce a hydrogen mixed gas, and the produced mixed gas is supplied to a utilization site through a gas pipe. The mixed gas is used as it is in a water heater, a gas stove, or the like.

When hydrogen is injected into an existing grid (conduit network) for natural gas or city gas, and a mixed gas of natural gas and hydrogen or a mixed gas of city gas and hydrogen is supplied through the grid, consumers (mixed gas consumer) who directly use the mixed gas are connected to the grid in addition to conventional natural gas or city gas consumers. In addition, it is also assumed that hydrogen consumers who use hydrogen gas are connected to the grid to use hydrogen gas from the mixed gas.

An example of a device for separating hydrogen gas from a mixed gas and supplying hydrogen gas is described in Patent Literature 1. Patent Literature 1 describes a device that separates hydrogen gas from city gas at one or more locations in a conduit network, and then returns at least some of the city gas after the separation to the conduit network, thereby separating the hydrogen gas from the city gas and supplying the separated hydrogen gas directly to equipment that uses hydrogen gas as fuels, such as fuel cells. In this device, by returning the gas after the separation to the conduit network, it is possible to accommodate consumers who use conventional city gas combustion equipment without changing the conventional system. When the hydrogen gas is separated, each of the Wobbe index (WI) and the combustion performance (CP) index of the gas after the separation is controlled to have a value within a predetermined range.

DOCUMENT LIST

PATENT LITERATURE

Patent Literature 1: JP 2002-213695 A

SUMMARY OF INVENTION

TECHNICAL PROBLEM

When a mixed gas (e.g., a mixed gas of natural gas and hydrogen) is supplied to each of a natural gas consumer, a mixed gas consumer, and a hydrogen consumer using an existing gas grid, it is necessary to adjust a component concentration and a calorific value (heat quantity) of the gas according to each required specification. In order to provide a gas in accordance with the specifications required by each consumer, measuring instruments are required to measure values such as a concentration of hydrogen contained in the mixed gas, a concentration of a coexisting substance (a substance other than hydrogen in the mixed gas), and a heat quantity and a density of the gas, but such measuring instruments, particularly hydrogen concentration meters, are expensive. Each consumer needs to have a gas separation device including such measuring instruments, which imposes a high equipment cost burden. Therefore, there is a demand for a gas separation device capable of reducing the number of measuring instruments and the equipment cost.

An object of the present invention is to provide a gas separation system capable of supplying hydrogen gas to a consumer at a low equipment cost.

SOLUTION TO PROBLEM

A gas separation system according to the present invention includes a plurality of gas separation devices and a gas separation system management unit connected to the plurality of gas separation devices. Each of the gas separation devices includes: a gas acquisition unit that is a pipe configured to acquire a mixed gas containing hydrogen gas from a pipeline through which the mixed gas flows; a gas separation unit including a separation membrane allowing hydrogen gas to permeate therethrough, and configured to separate a gas to be used by a consumer and a gas to be returned to the pipeline from the mixed gas using the separation membrane; a gas supply unit that is a pipe configured to supply the consumer with the gas to be used by the consumer, the gas being separated from the mixed gas by the gas separation unit; a gas discharge unit that is a pipe configured to discharge the gas to be returned to the pipeline, the gas being separated from the mixed gas by the gas separation unit; and a measuring instrument installed in at least one pipe among the gas acquisition unit, the gas supply unit, and the gas discharge unit, and configured to measure a physical quantity of the gas flowing through the installed pipe. The gas separation system management unit stores information about the consumer, and has an output item configured according to the type and application of the gas to be used by the consumer. The output item is a physical quantity of the gas output from the gas separation device. The measuring instrument is installed at a different location and measures a different output item depending on the type and application of the gas to be used by the consumer.

ADVANTAGEOUS EFFECTS OF INVENTION

According to the present invention, it is possible to provide a gas separation system capable of supplying hydrogen gas to a consumer at a low equipment cost.

BRIEF DESCRIPTION OF DRAWINGS

[FIG. 1A] FIG. 1A is a diagram illustrating a gas separation system according to a first embodiment of the present embodiment and a consumer to which a gas is supplied by the gas separation system according to a first embodiment of the present invention.
[FIG. 1B] FIG. 1B is a diagram schematically illustrating a configuration of a gas separation device.
[FIG. 2] FIG. 2 is an explanatory diagram illustrating an example of a configuration of the gas separation device depending on the consumer.
[FIG. 3] FIG. 3 is a diagram illustrating an example of a result of a simulation in which a mixed gas is subjected to separation using two-stage separation membranes.
[FIG. 4] FIG. 4 is a diagram illustrating an example of a screen displayed on a display device owned by the consumer.
[FIG. 5] FIG. 5 is a diagram illustrating an example of a management screen displayed by a display device included in a gas separation system according to a fifth embodiment of the present invention.

DESCRIPTION OF EMBODIMENTS

A gas separation system according to the present invention can separate hydrogen from a hydrogen-containing mixed gas. The mixed gas is a gas in which hydrogen gas is mixed with either natural gas or city gas. In the present invention, an output item (physical quantity of gas) is set depending on the consumer, and the number of measuring instruments for measuring the physical quantity of gas is reduced, thereby making it possible to reduce the equipment cost. In particular, it is possible to supply hydrogen gas that meets the specifications required by the consumer to the consumer of hydrogen gas without using an expensive hydrogen concentration meter.
Hereinafter, a gas separation system according to an embodiment of the present invention will be described with reference to the drawings. Hereinafter, an example in which the mixed gas is a gas in which hydrogen gas and natural gas are mixed will be described, and the hydrogen gas is also simply referred to as hydrogen. In the drawings used in the present specification, the same or corresponding components are denoted by the same reference signs, and repeated description of these components may be omitted.

FIRST EMBODIMENT

A gas separation system according to the first embodiment of the present invention will be described.

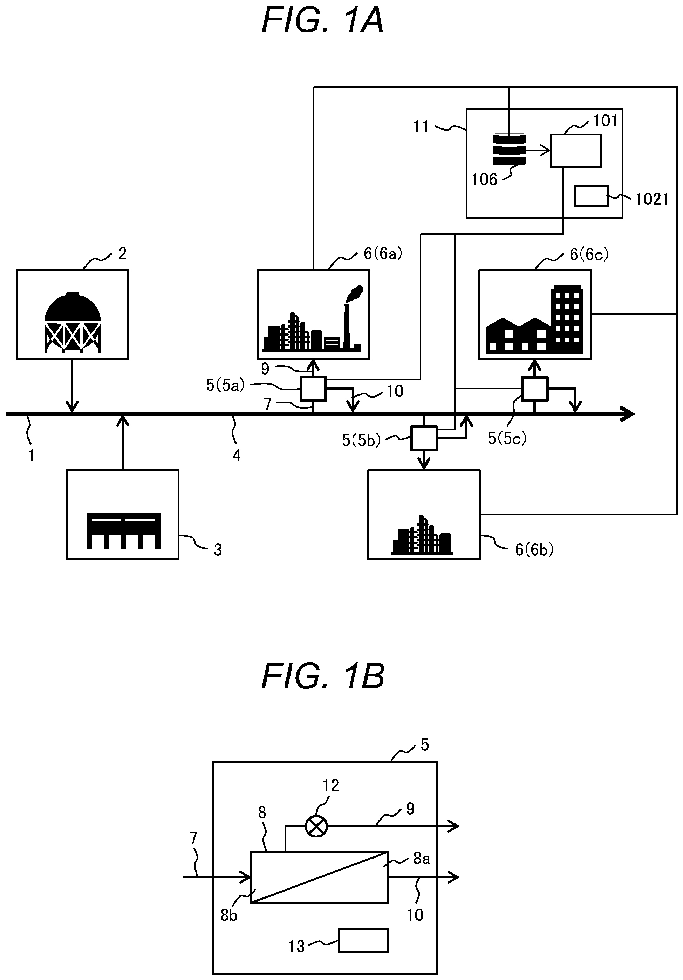

FIG. 1A is a diagram illustrating a gas separation system according to the present embodiment and a consumer to which a gas is supplied by the gas separation system according to the present embodiment.
The gas separation system according to the present embodiment includes a plurality of gas separation devices 5 and a gas separation system management unit 11 connected to these gas separation devices 5.
The plurality of gas separation devices 5 are connected to a pipeline 1 and supply a gas flowing through the pipeline 1 to consumers 6. FIG. 1A illustrates an example in which the gas separation system according to the present embodiment includes three gas separation devices 5a, 5b, and 5c, and the gas separation devices 5a, 5b, and 5c supply a gas to three consumers 6a, 6b, and 6c, respectively.
The consumer 6 uses the gas supplied from the gas separation device 5 as, for example, a fuel or a raw material.
Gases are supplied from a hydrogen supply base 2 and a natural gas supply base 3 to the pipeline 1, and a mixed gas 4, which is a gas containing hydrogen gas and natural gas, flows through the pipeline 1. The pipeline 1 is, for example, a piping system constituting an existing grid (conduit network) through which natural gas flows.

A configuration of the gas separation device 5 will be described.

FIG. 1B is a diagram schematically illustrating a configuration of the gas separation device 5. The gas separation device 5 includes a gas acquisition unit 7, a gas separation unit 8, a gas supply unit 9, a gas discharge unit 10, a measuring instrument 12, and a control unit 13.

The gas acquisition unit 7 is a pipe for acquiring the mixed gas 4 from the pipeline 1, and is connected to the pipeline 1 and the gas separation unit 8. The mixed gas 4 acquired from the pipeline 1 by the gas acquisition unit 7 is also referred to as an acquired gas. The gas acquisition unit 7 supplies the mixed gas 4 (acquired gas) to the gas separation unit 8.

The gas separation unit 8 includes a separation membrane, and separates a gas to be used by consumer 6 and a gas (excess gas) to be returned to the pipeline 1 from the mixed gas 4 using the separation membrane. The gas to be used by the consumer 6 is obtained by separating it from the mixed gas 4 through the gas separation unit 8. The separation membrane is a membrane in which the permeation rate of hydrogen gas is higher than the permeation rates of the other gases, and for example, an existing hydrogen separation membrane made of a ceramic membrane, a metal membrane, or a polymer membrane can be used. In the present embodiment, an example in which a polymer membrane, formed by bundling hollow fibers molded from a polymer material into a module, is used as a separation membrane will be described.

The gas separation unit 8 includes a permeation part 8a in which hydrogen gas that has permeated through the separation membrane is present, and a non-permeation part 8b in which a gas that has not permeated through the separation membrane is present. The gas separation unit 8 preferably includes two separation membranes (two-stage separation membranes) as will be described later.

The gas supply unit 9 is a pipe for delivering a gas to be used by the consumer 6 to the consumer 6, and is connected to the gas separation unit 8. The gas to be used by the consumer 6 is a gas obtained by separating it from the mixed gas 4 through the gas separation unit 8.

The gas discharge unit 10 is a pipe for discharging excess gas obtained by separating it from the mixed gas 4 through the gas separation unit 8, and is connected to the gas separation unit 8. The excess gas is the mixed gas 4 (a gas not required by the consumer 6) after the gas to be used by the consumer 6 is separated by the gas separation unit 8. The gas discharge unit 10 is connected to the pipeline 1, and returns the excess gas from the gas separation unit 8 to the pipeline 1.

Depending on the type and application of the gas to be used by the consumer 6, the measuring instrument 12 is installed at a different position and measures a different output item. Specifically, the measuring instrument 12 is installed in at least one of the gas acquisition unit 7, the gas supply unit 9, and the gas discharge unit 10, and measures a physical quantity of a gas flowing through the pipe in which the measuring instrument 12 is installed. As the measuring instrument 12, an existing measuring instrument can be used.

The control unit 13 controls the gas separation device 5 as will be described later.

The gas separation unit 8, the gas supply unit 9, and the gas discharge unit 10 may include one or both of valves and compressors for controlling the pressure of the gas. Furthermore, the gas separation unit 8, the gas supply unit 9, and the gas discharge unit 10 may include heating units that adjust the temperature of the flowing gas, or a bypass flow path through which some of the flowing gas branches off and flows. The control unit 13 controls such valves, compressors, and heating units.

The gas separation system management unit 11 illustrated in FIG. 1A will be described. The gas separation system management unit 11 can be configured by a computer, and includes a consumer information database 106 and a setting unit 101. The gas separation system management unit 11 can receive, from the gas separation device 5, information regarding the control of the control unit 13 (values calculated by the control unit 13 to perform control, control operations performed by the control unit 13, and the like) and measurement values of measuring instrument 12. The gas separation system management unit 11 may also include a display device 1021.

The consumer information database 106 stores information about the consumer 6 connected to the pipeline 1 as consumer information.

The consumer information includes, for example, the type and application (purpose of use) of the gas to be used by the consumer 6, the specifications required by the consumer 6 (values required for the gas to be used by the consumer 6), and information on gas equipment used by the consumer 6. The specifications required by the consumer 6 include, for example, a density, a calorific value (heat quantity), and a component concentration of the gas.

The type of gas is one type of gas (natural gas or hydrogen in the present embodiment) among the gases contained in the mixed gas 4 flowing through the pipeline 1, or the mixed gas 4.

The gas is used for a fuel or a raw material in the present embodiment.

The component concentration is a conditional value for the concentration of the gas, and is, for example, a lower limit value of the concentration of the gas to be used by the consumer 6 or an upper limit value of the concentration of the coexisting gas (a gas contained in the mixed gas 4 and other than the gas to be used by the consumer 6).

The information on equipment used is information about equipment used for the gas by the consumer 6, and includes, for example, an allowable heat quantity range for the equipment.

For each of the gas separation devices 5, a consumer type, an output item, and an output target value are set in the setting unit 101 depending on the consumer 6 to which the gas separation device 5 supplies a gas. The consumer type, the output item, and the output target value are set based on the consumer information stored in the consumer information database 106.

The consumer type includes the type and application of the gas to be used by the consumer 6.

The output items are physical quantities of the gas output from the gas separation device 5, and are, for example, density, calorific value (heat quantity), and component concentration. In the present embodiment, since the mixed gas 4 is a gas in which hydrogen gas and natural gas are mixed, the component concentration is, for example, a hydrogen concentration or a carbon dioxide concentration in the natural gas. The output item can be determined depending on the consumer 6, and can be determined, for example, from the type and application of the gas to be used by the consumer 6 and the specifications required by the consumer 6.

The output target value is a target value of the output item, that is, a target value of the physical quantity of the gas to be output from the gas separation device 5. The output target value can be determined depending on the consumer 6, and can be determined from, for example, the specifications required by the consumer 6 and the information on equipment used by the consumer 6.

For each of the gas separation devices 5, a consumer type, an output item, and an output target value are set in the setting unit 101 before the gas separation device 5 is installed for the consumer 6.

The gas separation device 5 has a configuration corresponding to the gas to be used by consumer 6. That is, the gas separation device 5 is configured based on the consumer type, the output item, and the output target value set in the setting unit 101 of the gas separation system management unit 11.

The gas separation device 5 is configured based on the consumer type, the output item, and the output target value depending on the consumer 6, and is installed between the consumer 6 and the pipeline 1. The measuring instrument 12 included in the gas separation device 5 is capable of measuring a value of the output item.

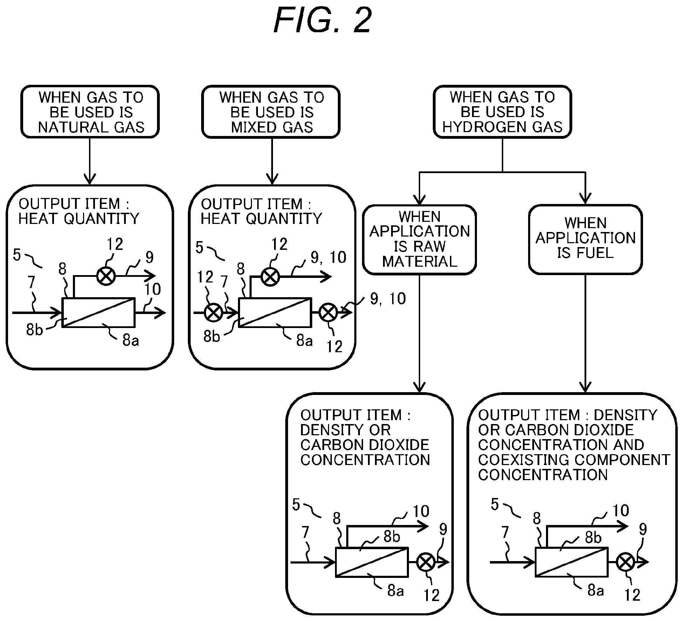

FIG. 2 is an explanatory diagram illustrating an example of a configuration of the gas separation device 5 depending on the consumer 6. The plurality of gas separation devices 5 installed in the pipeline 1 have different configurations according to the gases to be used by the corresponding consumers 6. FIG. 2 illustrates an example of a configuration of the gas separation device 5 depending on the consumer type, that is, for each of the cases where the gas to be used by the consumer 6 is natural gas, the case where the gas to be used by the consumer 6 is the mixed gas 4, and the case where the gas to be used by the consumer 6 is hydrogen gas.

For consumers 6 who use natural gas and consumers 6 who use the mixed gas 4, the application of gas, which is consumer information, is generally a fuel, and the calorific value per unit volume (hereinafter, also referred to as a heat quantity), which is a standard for heat quantity, is a required specification. Therefore, for the consumer 6 of the natural gas and the consumer 6 of the mixed gas 4, the output item is a heat quantity. The output target value is a target value of the heat quantity of the gas, and is determined depending on, for example, the specifications required by the consumer 6 and the information on the equipment used by the consumer 6 (the information about equipment used by the consumer 6 for the gas).

When the gas separation unit 8 performs separation with respect to the mixed gas 4 through the separation membrane, the permeation part 8a has a high concentration of hydrogen, while the non-permeation part 8b has a high concentration of methane or the like, which is a main component of the natural gas. Therefore, a gas obtained from the non-permeation part 8b of the gas separation unit 8 included in the gas separation device 5 is provided to the consumer 6 of the natural gas.

Therefore, in the gas separation device 5 that supplies a gas to the consumer 6 of the natural gas, the gas supply unit 9 is connected to the non-permeation part 8b of the gas separation unit 8, and the measuring instrument 12 is installed in the gas supply unit 9. The measuring instrument 12 is a gas calorimeter that measures a heat quantity of natural gas. The gas discharge unit 10 is connected to the permeation part 8a of the gas separation unit 8.

In the gas separation device 5 that supplies a gas to the consumer 6 of the mixed gas 4, whether to connect the gas supply unit 9 that supplies the gas to the consumer 6 to the non-permeation part 8b or the permeation part 8a of the gas separation unit 8 is determined by the relationship between the heat quantity of the mixed gas 4 acquired from the pipeline 1 and the heat quantity that is a specification required by the consumer 6.

Hydrogen gas has a smaller heat quantity per unit volume than natural gas or methane gas, which is a main component of natural gas. Therefore, when the heat quantity of the mixed gas 4, which is an acquired gas, is smaller than the specification required by the consumer 6, it can be determined that the mixed gas 4 contains an excessive amount of hydrogen gas. In the gas separation device 5, the concentration of methane gas in the non-permeation part 8b is higher than the concentration of methane gas in the mixed gas 4.

Therefore, when the heat quantity of the mixed gas 4 is smaller than the specification required by the consumer 6 as a result of preliminary investigation, the gas in the non-permeation part 8b is provided to the consumer 6. That is, in the gas separation device 5 that supplies a gas to the consumer 6 of the mixed gas 4, when the heat quantity of the mixed gas 4 is smaller than the specification required by consumer 6, the gas supply unit 9 is connected to the non-permeation part 8b of the gas separation unit 8, and the gas discharge unit 10 is connected to the permeation part 8a of the gas separation unit 8.

On the other hand, when the heat quantity of the mixed gas 4 is larger than the specification required by the consumer 6 as a result of preliminary investigation, the gas in the permeation part 8a is provided to the consumer 6. That is, in gas separation device 5 that supplies gas to consumer 6 of mixed gas 4, when the heat quantity of mixed gas 4 is larger than the specification required by consumer 6, the gas supply unit 9 is connected to the permeation part 8a of the gas separation unit 8, and the gas discharge unit 10 is connected to the non-permeation part 8b of the gas separation unit 8. The gas in the permeation part 8a has a higher hydrogen concentration than the mixed gas 4.

Note that the heat quantity and the hydrogen concentration of the acquired gas (the mixed gas 4 acquired from the pipeline 1 by the gas acquisition unit 7) may fluctuate. Therefore, whether to connect the gas supply unit 9 to the non-permeation part 8b or the permeation part 8a of the gas separation unit 8 does not need to be decided and fixed before the gas separation device 5 is installed in the pipeline 1, and may be switched during the operation of the gas separation device 5.

For example, it is assumed that each of the pipes connected to the non-permeation part 8b and the permeation part 8a of the gas separation unit 8 is branched into two, with one branch serving as the gas supply unit 9 that supplies the gas to the consumer 6, and the other branch serving as the gas discharge unit 10 that returns excess gas. Valves are installed in the branched pipe. The control unit 13 can change whether the branched pipe supplies the gas to the consumer 6 or returns the gas to the pipeline 1 by controlling the opening and closing of these valves. In this way, during operation, the gas separation device 5 can switch whether to connect the gas supply unit 9 to the non-permeation part 8b or the permeation part 8a depending on the relationship between the heat quantity of the acquired gas (mixed gas 4) and the heat quantity that is a specification required by the consumer 6.

As described above, in the gas separation device 5 that supplies a gas to the consumer 6 of the mixed gas 4, whether to connect the gas supply unit 9 to the non-permeation part 8b or the permeation part 8a of the gas separation unit 8 is determined based on the heat quantity of the mixed gas 4, which is an acquired gas. Therefore, the measuring instruments 12 are installed at three locations: the gas acquisition unit 7, the gas supply unit 9, and the gas discharge unit 10. These measuring instruments 12 are gas calorimeters that measure the heat quantity of gas.

As described above, in the gas separation device 5 that supplies a gas to the consumer 6 of the mixed gas 4, one of the gas supply unit 9 and the gas discharge unit 10 is installed in the permeation part 8a, the other is installed in the non-permeation part 8b, and the measuring instruments 12 are installed in the gas acquisition unit 7, the gas supply unit 9, and the gas discharge unit 10.

In the gas separation device 5 that supplies a gas to the consumer 6 of the mixed gas 4, the control unit 13 can change the gas to be supplied to the consumer 6 by receiving an output item and an output target value input from the gas separation system management unit 11, determining which of the gas in the permeation part 8a and the gas in the non-permeation part 8b is supplied to the consumer 6 using measurement values of measuring instruments 12 installed in the gas acquisition unit 7, etc., and switching whether to connect the gas supply unit 9 to the non-permeation part 8b or the permeation part 8a.

In the gas separation device 5 that supplies a gas to the consumer 6 of the hydrogen gas, the gas supply unit 9 is connected to the permeation part 8a of the gas separation unit 8, and the measuring instrument 12 is installed in the gas supply unit 9. The gas discharge unit 10 is connected to the non-permeation part 8b of the gas separation unit 8.

The consumers 6 who use hydrogen gas are divided into consumers 6 whose application of hydrogen gas is a raw material for chemical products and consumers 6 whose application of hydrogen gas is a fuel for hydrogen boilers, hydrogen vehicles, and the like. Hereinafter, the gas separation device 5 that supplies a gas to each consumer 6 will be described.

When hydrogen gas is used as a raw material, the concentration of hydrogen gas is required as a specification regardless of the heat quantity of the supplied gas. Therefore, for the consumer 6 whose application of hydrogen gas is a raw material, the concentration of hydrogen gas is a required specification.

The consumer 6 whose application of hydrogen gas is a raw material requires high-concentration hydrogen, and thus, a gas having a high hydrogen concentration is provided to the consumer 6. Therefore, in the gas separation device 5 that supplies a gas to the consumer 6 whose application of hydrogen gas is a raw material, a hydrogen concentration meter may be installed as the measuring instrument 12 according to the required specification. However, the types of measuring instruments capable of continuously measuring a hydrogen concentration in a mixed gas containing three or more kinds of components are limited, and expensive equipment such as gas chromatography is required.

Therefore, in order to reduce the equipment cost of the gas separation system, it is preferable to use a densitometer or a carbon dioxide concentration meter, which is a general-purpose measuring instrument, as the measuring instrument 12 of the gas separation device 5. In the present embodiment, the gas separation device 5 is controlled using a densitometer or a carbon dioxide concentration meter as the measuring instrument 12.

In the present embodiment, assuming that the components of the gas supplied from the gas separation device 5 to the consumer 6 are two components: hydrogen and carbon dioxide, an output target value is set, and high-concentration hydrogen is provided to the consumer 6. Since a densitometer or a carbon dioxide concentration meter is used as the measuring instrument 12, the output item is a density or a carbon dioxide concentration of the gas to be supplied to the consumer 6. The densitometer and the carbon dioxide concentration meter, which are measuring instruments 12, measure a density and a carbon dioxide concentration, respectively, of the gas flowing through the gas supply unit 9.

For example, when the output item is a density, the control unit 13 of the gas separation device 5 sets the target value of the density $\rho$ of the gas, which is an output target value, to a value that satisfies Formula (1), and controls the gas separation device 5 so that the density $\rho$ becomes the output target value. By performing such control, the density $\rho$ of the gas to be supplied to the consumer 6 becomes a value that satisfies Formula (1).

[Math. 1]

$$\rho < \rho_{H2} \times \frac{C_{H2}}{100} + \rho_{CO2} \times \left(1 - \frac{C_{H2}}{100}\right) \qquad \cdot\cdot\cdot\;(1)$$

On the left side of Formula (1), the density $\rho$ of gas is a density ($kg/m^3$) of a gas flowing through the gas supply unit 9. On the right side, the subscripts affixed to $\rho$ and C indicate components (hydrogen and carbon dioxide) in the gas, $\rho$ is a density ($kg/m^3$) of the component indicated by the subscript, and C is a target component concentration (vol%) of the component (hydrogen) indicated by the subscript based on the specification required by the consumer 6. In Formula (1), values determined as physical property values of pure gases are used for the density $\rho_{H2}$ of hydrogen and the density $\rho_{CO2}$ of carbon dioxide.

When the density of the gas to be supplied to the consumer 6 is high, this indicates that the hydrogen concentration of this gas is low. Therefore, the control unit 13 of the gas separation device 5 operates the valves and the compressors by feedback control using a known technique to change the operating conditions (e.g., gas flow rate and pressure) of the gas separation device 5, thereby controlling the gas separation device 5 so that the density $\rho$ of the gas to be supplied to the consumer 6 decreases to be the output target value (that is, so as to satisfy Formula (1)). By performing such control, the control unit 13 can increase the hydrogen concentration of the gas to be supplied to the consumer 6 to reach the target hydrogen concentration.

When the output item is a carbon dioxide concentration, the control unit 13 of the gas separation device 5 controls the gas separation device 5 so that the hydrogen concentration becomes the target hydrogen concentration based on the specification required by the consumer 6, assuming that the component other than carbon dioxide in the acquired gas (mixed gas 4) is hydrogen according to the above-described assumption.

When the carbon dioxide concentration of the gas to be supplied to the consumer 6 is high, this indicates that the hydrogen concentration of this gas is small. Therefore, the control unit 13 of the gas separation device 5 controls the gas separation device 5 such that the carbon dioxide concentration of the gas flowing through the gas supply unit 9, which is measured by the measuring instrument 12, decreases. Specifically, the control unit 13 operates the valves and the compressors by feedback control using a known technique to change the operating conditions (e.g., gas flow rate and pressure) of the gas separation device 5, thereby controlling the gas separation device 5 so that the carbon dioxide concentration of the gas to be supplied to the consumer 6 decreases, and the hydrogen concentration increases to reach the target hydrogen concentration.

Similarly to the consumer 6 whose application of hydrogen gas is a raw material, the consumer 6 whose application of hydrogen gas is a fuel uses hydrogen as a fuel, for example, for hydrogen vehicles or hydrogen boilers, requires hydrogen with a high concentration equal to or higher than a specified value. Therefore, the gas separation device 5 that supplies a gas to the consumer 6 whose application of hydrogen gas is a fuel can have the same configuration as the gas separation device 5 that supplies a gas to the consumer 6 whose application of hydrogen gas is a raw material.

Further, the consumer 6 whose application of hydrogen gas is a fuel may set the upper limit of the concentration of the coexisting component (the component other than hydrogen in the mixed gas 4) in the required specifications. In such a case, it is necessary to measure a concentration of the coexisting component, the concentration of the coexisting component may be set as an output item. Although the equipment cost increases, the gas separation device 5 may include a measuring instrument 12 that measures a concentration of a coexisting component in the gas supply unit 9. As the measuring instrument 12 that measures the concentration of the coexisting component, a known measuring instrument can be used.

In this manner, the gas separation device 5 that supplies a gas to the consumer 6 whose application of hydrogen gas is a fuel can provide a gas having a high hydrogen concentration to the consumer 6.

Hereinafter, the reason why the gas to be supplied to the consumer 6 by the gas separation device 5 is assumed to contain two components, hydrogen and carbon dioxide, will be described. The consumers 6 who use hydrogen often require high-concentration hydrogen. Therefore, it is preferable that the gas separation unit 8 includes two separation membranes connected in series, and the gas is separated by the two-stage separation membranes to obtain high-concentration hydrogen. In the separation of the gas using the separation membranes, a difference of each gas in permeation rate through the separation membrane is used.

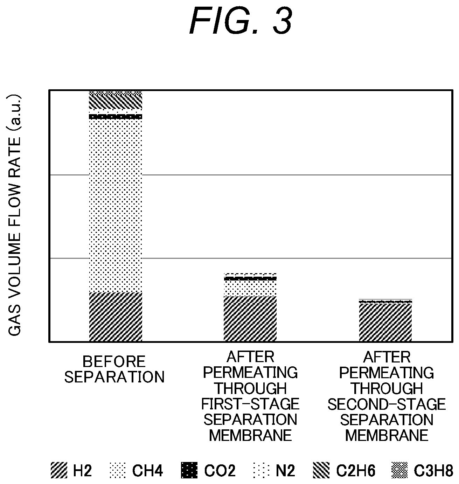

FIG. 3 is a diagram illustrating an example of a result of a simulation in which a mixed gas is subjected to separation using two-stage separation membranes. FIG. 3 shows volume flow rates of components contained in the mixed gas before separation, the gas immediately after permeating through the first-stage separation membrane, and the gas that has permeated through the second-stage separation membrane.

In this simulation, using an existing simulation technique, calculations were performed to simulate gas separation using the two-stage separation membranes based on permeation rates of gas components contained in the mixed gas through the separation membranes. The mixed gas was a mixed gas in which 20 vol% of hydrogen gas was mixed in natural gas. In this simulation, it was assumed that the separation membrane was made of a module (a membrane module of a polymer material) in which hollow fibers formed of a polymer material were bundled.

Before separation from the mixed gas, the mixed gas contains hydrogen (H2), methane (CH4), carbon dioxide (CO2), ethane (C2H6), and the like. In the mixed gas before separation, the concentration (proportion) of methane is high, and the concentration of hydrogen is next high.

Immediately after separation from the mixed gas using the first-stage separation membrane (before separation using the second-stage separation membrane), in the gas that has permeated through the separation membrane, the concentration of hydrogen having a high permeation rate is high, while the concentration of methane or the like having a low permeation rate is low. Carbon dioxide having a higher permeation rate than methane has a higher concentration. A gas such as methane having a low permeation rate moves to the non-permeation part 8b without permeating through the separation membrane.

After separation from the mixed gas using the second-stage separation membrane, in the gas that has permeated through the separation membrane, the concentration of methane or the like having a low permeation rate significantly decreases, while the concentrations of hydrogen and carbon dioxide having high permeation rates are high.

As described with reference to FIG. 3, when the mixed gas 4 is subjected to separation by the two-stage separation membranes, the gas that has permeated through the two-stage separation membranes can be regarded as a gas composed of two components, hydrogen and carbon dioxide, because the concentrations of the components other than hydrogen and carbon dioxide are low. Therefore, when supplying hydrogen gas to the consumer 6, it can be assumed that the components of the gas to be supplied to the consumer 6 are two components: hydrogen and carbon dioxide.

As described above, the gas separation system according to the present embodiment sets an appropriate output target value corresponding to the consumer 6, and is equipped with a measuring instrument 12 corresponding to the output target value, thereby making it possible to supply a gas required by the consumers 6 (e.g., hydrogen gas, natural gas, and a mixed gas of hydrogen gas and natural gas) to the consumers 6 at a low equipment cost.

SECOND EMBODIMENT

In a gas separation system according to the second embodiment of the present invention, for a consumer 6 who uses hydrogen gas (a consumer 6 who uses hydrogen gas as a raw material or a fuel), the gas separation system management unit 11 calculates an estimated value of a concentration of hydrogen contained in the gas to be supplied to the consumer 6 from the density or the carbon dioxide concentration of the gas to be supplied to the consumer 6. The gas separation system according to the present embodiment can provide the consumer 6 with an estimated value of a hydrogen concentration, which is a specification required by the consumer 6.

As described in the first embodiment, when high-concentration hydrogen is provided to the consumer 6, it can be assumed that the components of the gas supplied to the consumer 6 by the gas separation device 5 are two components: hydrogen and carbon dioxide. Therefore, the gas separation system management unit 11 can calculate a concentration of hydrogen flowing through the gas supply unit 9 (that is, hydrogen contained in the gas to be supplied to the consumer 6) from the density of the gas flowing through the gas supply unit 9, which is measured by the measuring instrument 12, using the following Formula (2). In addition, the gas separation system management unit 11 can calculate a concentration of hydrogen flowing through the gas supply unit 9 from the carbon dioxide concentration of the gas flowing through the gas supply unit 9, which is measured by the measuring instrument 12, using the following Formula (3).

[Math. 2]

$$C_{H2} = \frac{\rho - \rho_{CO2}}{\rho_{H2} - \rho_{CO2}} \times 100 \qquad \cdot \cdot \cdot (2)$$

[Math. 3]

$$C_{H2} = \left(1 - \frac{c_{CO2}}{100}\right) \times 100 \qquad \cdots (3)$$

In Formulas (2) and (3), $\rho$ is a density (kg/m$^3$) of the gas flowing through the gas supply unit 9, $\rho_{H2}$ is a density (kg/m$^3$) of hydrogen flowing through the gas supply unit 9, $\rho_{CO2}$ is a density (kg/m$^3$) of carbon dioxide flowing through the gas supply unit 9, $C_{H2}$ is a concentration (vol%) of hydrogen flowing through the gas supply unit 9, and $C_{CO2}$ is a concentration (vol%) of carbon dioxide flowing through the gas supply unit 9.

The gas separation system management unit 11 can transmit calculated hydrogen concentration $C_{H2}$ to the consumer 6.

THIRD EMBODIMENT

In the third embodiment of the present invention, control performed by the gas separation system according to the present embodiment will be described. This control is executed by the control unit 13 of the gas separation device 5. The gas separation system according to the present embodiment can execute control in accordance with the specifications required by each consumer 6. Furthermore, even when the component concentrations of the mixed gas 4 flowing through the pipeline 1 change, the gas separation system according to the present embodiment can execute follow-up control with little delay in response to this change.

Hereinafter, control executed by the control unit 13 for each of the consumer types (the consumer 6 of the natural gas, the consumer 6 of the mixed gas 4, and the consumer 6 of the hydrogen gas) illustrated in FIG. 2 will be described.

The control unit 13 controls one or more of the flow rates and the pressures of the gas to be supplied to the gas separation unit 8 (that is, the gas flowing through the gas acquisition unit 7), the gas flowing through the gas supply unit 9, and the gas flowing through the gas discharge unit 10, thereby supplying the gas to be used by the consumer 6 to the consumer 6. The control unit 13 can perform control to change the flow rate and the pressure of the gas in accordance with the specifications required by the consumer 6 by operating the valve and the compressor by feedback control using a known technique.

For the consumer 6 who uses natural gas, the gas separation device 5 is controlled so that the hydrogen concentration of the gas to be supplied to the consumer 6 decreases when the value of the heat quantity, which is an output item, falls below the specification required by the consumer 6. The value of the output item is measured by the measuring instrument 12. Specifically, by lowering the pressure of the permeation part 8a of the gas separation unit 8 or by increasing the pressure of the gas supplied to the gas separation unit 8, the amount of hydrogen gas permeating through the separation membrane is increased to reduce the hydrogen concentration of the gas to be supplied to the consumer 6 (that is, the gas present in the non-permeation part 8b of the gas separation unit 8). In addition, by reducing the flow rate of the mixed gas 4 (acquired gas) acquired by the gas acquisition unit 7 from the pipeline 1, the gas flow rate with respect to the area of the separation membrane can be reduced to reduce the hydrogen concentration of the gas to be supplied to the consumer 6.

For the consumer 6 who uses a mixed gas, since the output item is a heat quantity, the gas present in the non-permeation part 8b is supplied to the consumer 6 when the heat quantity of the acquired gas (mixed gas 4) is smaller than the specification required by the consumer 6, and the gas present in the permeation part 8a is supplied to the consumer 6 when the heat quantity of the acquired gas is larger than the specification required by the consumer 6. The value of the output item is measured by the measuring instrument 12.

When both the heat quantity of the acquired gas and the heat quantity of the gas flowing through the gas supply unit 9 are smaller than the specification required by the consumer 6, the gas separation device 5 is controlled so as to decrease the hydrogen concentration of the gas to be supplied to the consumer 6. Specifically, by lowering the pressure of the permeation part 8a of the gas separation unit 8 or by increasing the pressure of the gas supplied to the gas separation unit 8, the amount of hydrogen gas permeating through the separation membrane is increased to reduce the hydrogen concentration of the gas to be provided to the consumer 6 (that is, the gas present in the non-permeation part 8b of the gas separation unit 8). In addition, by reducing the flow rate of the mixed gas 4 (acquired gas) acquired by the gas acquisition unit 7 from the pipeline 1, the gas flow rate with respect to the area of the separation membrane can be reduced to reduce the hydrogen concentration of the gas to be supplied to the consumer 6.

When both the heat quantity of the acquired gas and the heat quantity of the gas flowing through the gas supply unit 9 are larger than the specification required by the consumer 6, the gas separation device 5 is controlled so as to increase the hydrogen concentration of the gas to be supplied to the consumer 6.

For the consumer 6 who uses hydrogen gas, the gas separation device 5 is controlled so that the hydrogen concentration of the gas to be supplied to the consumer 6 increases when the value of the density, which is an output item, exceeds the specification required by the consumer 6 or when the value of the carbon dioxide concentration, which is an output item, exceeds the specification required by the consumer 6. The value of the output item is measured by the measuring instrument 12. Specifically, by lowering the pressure of the permeation part 8a of the gas separation unit 8 or by increasing the pressure of the gas supplied to the gas separation unit 8, the amount of hydrogen gas permeating through the separation membrane is increased to increase the hydrogen concentration of the gas to be supplied to the consumer 6 (that is, the gas present in the permeation part 8a of the gas separation unit 8). In addition, by reducing the flow rate of the mixed gas 4 (acquired gas) acquired by the gas acquisition unit 7 from the pipeline 1, the gas flow rate with respect to the area of the separation membrane can be reduced to increase the hydrogen concentration of the gas to be supplied to the consumer 6.

Since the gas separation system according to the present embodiment includes the measuring instrument 12 in the gas acquisition unit 7, even if the component concentrations of the gas (mixed gas 4) acquired from the pipeline 1 change, the gas satisfying the specifications required by the consumer 6 can be supplied to the consumer 6. The measuring instrument 12 installed in the gas acquisition unit 7 is a calorimeter, a densitometer, or a carbon dioxide concentration meter. The control unit 13 also executes such control.

The component concentrations of the gas acquired from the pipeline 1 by the gas separation device 5 change over time depending on the amount of gas supplied from the natural gas supply base 3 and the hydrogen supply base 2 and the component concentrations and amount of gas returned from the neighboring gas separation device 5. The control unit 13 of the gas separation device 5 changes the flow rate or the pressure of at least one of the gas to be supplied to the gas separation unit 8 (that is, the gas flowing through the gas acquisition unit 7), the gas flowing through the gas supply unit 9, and the gas flowing through the gas discharge unit 10 so that the output target value becomes a predetermined prescribed value. As such a method for changing the flow rate or the pressure of the gas, the above-described method or a known method can be used.

The magnitude of change per unit time (temporal change width) of the flow rate or the pressure at this time can be set based on the magnitude of change per unit time (temporal change width) of the measurement value of the measuring instrument 12 installed in the gas acquisition unit 7. A large temporal change width of the measurement value of the measuring instrument 12, that is, a large temporal change width of the measurement value of the gas (mixed gas 4) acquired from the pipeline 1 indicates that the component concentration of the mixed gas 4 rapidly changes in a short period of time. Therefore, a value obtained by multiplying the temporal change width of the measurement value of the measuring instrument 12 by a coefficient arbitrarily determined in advance can be set as the temporal change width of the flow rate or the pressure.

By executing such control, even when the component concentrations of the mixed gas 4 flowing through the pipeline 1 change, the control unit 13 of the gas separation device 5 can execute follow-up control with little delay in response to this change.

FOURTH EMBODIMENT

In the present embodiment, an example of a screen that the gas separation system according to an embodiment of the present invention causes a display device that the consumer 6 has to display will be described.

The gas separation system according to an embodiment of the present invention can provide the consumer 6 with information regarding the gas supplied to the consumer 6. In the gas separation system according to an embodiment of the present invention, the gas separation device 5 transmits data obtained by the measuring instrument 12 and the control unit 13 to the gas separation system management unit 11, and the gas separation system management unit 11 transmits the data received from the gas separation device 5 to the consumer 6.

The consumer 6 owns a display device that receives and displays the data transmitted from the gas separation system management unit 11.

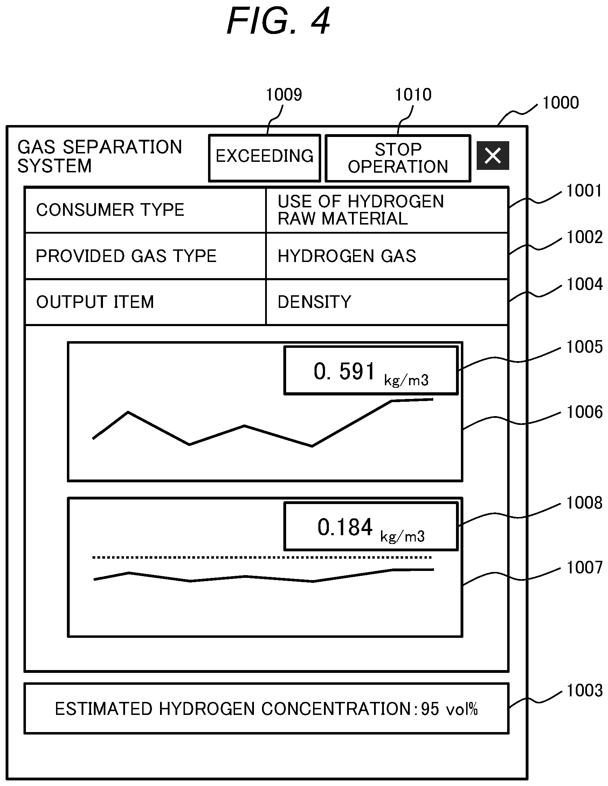

FIG. 4 is a diagram illustrating an example of a screen displayed on the display device owned by the consumer 6. The display screen 1000 displays a consumer type 1001, a type of gas to be supplied to the consumer 6 (provided gas type 1002), an output item 1004, and an estimated hydrogen concentration 1003. The estimated hydrogen concentration 1003 is a hydrogen concentration $C_{H2}$ (a concentration of hydrogen flowing through the gas supply unit 9) calculated by the gas separation system management unit 11 using Formula (2) or Formula (3) as described in the second embodiment.

Further, the display screen 1000 displays a current measurement value 1005 of the density of the gas (acquired gas) acquired from the pipeline 1 by the gas separation system according to the embodiment of the present invention, a time history 1006 of the measurement value of the density of the acquired gas, a required specification 1008 of the output target value of the gas supplied to the consumer 6, and a time history 1007 of the output target value of the gas supplied to the consumer 6.

In addition, the display screen 1000 may display an alert display unit 1009 that displays an alert when the gas supplied to the consumer 6 does not satisfy the specification 1008 required by the consumer 6 and a button 1010 for stopping the operation of the gas separation device 5, or may display the power consumed by the gas separation system and the electricity charge for the gas separation system.

For example, when the gas supplied to the consumer 6 exceeds the specification 1008 required by the consumer 6, the alert display unit 1009 displays an alert by changing the display. The change in the display of the alert display unit 1009 is, for example, lighting or blinking.

The consumer 6 can stop the operation of the gas separation device 5, for example, by clicking the button 1010. For example, when the button 1010 is clicked, the valve included in the gas separation device 5 is closed, and the supply of the gas from the gas separation device 5 to the consumer 6 is stopped.

FIFTH EMBODIMENT

In the gas separation system according to the fifth embodiment of the present invention, the gas separation system management unit 11 includes a display device, and data obtained by the measuring instrument 12 and the control unit 13 of the gas separation device 5 can be displayed on the display device. The gas separation system according to the present embodiment can provide an administrator of the gas separation system with information about the operation status of the gas separation device 5 and the gas supplied to the consumer 6. The administrator of the gas separation system can check whether the gas separation device 5 is normally operating.

Hereinafter, an example of a screen displayed by the display device 1021 included in the gas separation system according to the present embodiment will be described. The gas separation system management unit 11 includes a display device 1021, and displays, for example, the following management screen on display device 1021.

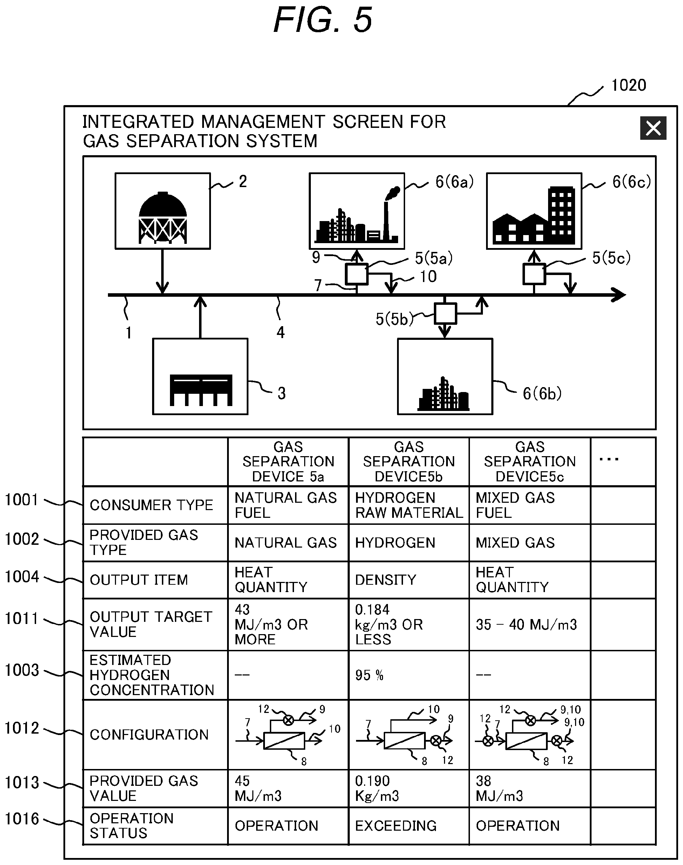

FIG. 5 is a diagram illustrating an example of a management screen 1020 displayed by the display device 1021 included in the gas separation system according to the present embodiment.

The management screen 1020 displays the gas separation devices 5 (5a, 5b, 5c) connected to the pipeline 1. The management screen 1020 displays a consumer type 1001, a provided gas type 1002, an output item 1004, and an estimated hydrogen concentration 1003 for each of the gas separation devices 5 (5a, 5b, 5c), and further displays an output target value 1011, a configuration 1012 of the gas separation device 5, and a measurement value (provided gas value 1013) of the gas supplied to the consumer 6. As described in the fourth embodiment, the estimated hydrogen concentration 1003 is a hydrogen concentration $C_{H2}$ (a concentration of hydrogen flowing through the gas supply unit 9) calculated by the gas separation system management unit 11. The provided gas value 1013 is a measurement value of the measuring instrument 12 installed in the gas supply unit 9.

Further, the management screen 1020 may display information about a time history of the provided gas value 1013, a time history of the estimated hydrogen concentration 1003, an operation status 1016 of the gas separation device 5, and the gas flowing through the pipeline 1. The operation status 1016 of the gas separation device 5 indicates, for example, that the gas separation device 5 is in operation, that the gas supplied to the consumer 6 exceeds the specification 1008 required by the consumer 6, and the like.

Note that the present invention is not limited to the above-described embodiments, and various modifications may be made. For example, the above-described embodiments have been described in detail in order to describe the present invention in an easy-to-understand manner, and the present invention is not necessarily limited to an aspect having all the configurations described above. Further, a part of a configuration of one embodiment can be replaced with a configuration of another embodiment. In addition, a configuration of one embodiment can be added to a configuration of another embodiment. In addition, with respect to a part of a configuration of each embodiment, it is possible to perform deletion, addition of another configuration, or replacement with another configuration.

LIST OF REFERENCE CHARACTERS

1 pipeline
2 hydrogen supply base
3 natural gas supply base
4 mixed gas
5, 5a, 5b, 5c gas separation device
6, 6a, 6b, 6c consumer
7 gas acquisition unit
8 gas separation unit
8a permeation part
8b non-permeation part
9 gas supply unit
10 gas discharge unit
11 gas separation system management unit
12 measuring instrument

13 control unit
101 setting unit
106 consumer information database
1000 display screen
1001 consumer type
1002 provided gas type
1003 estimated hydrogen concentration
1004 output item
1005 current measurement value of density of acquired gas
1006 time history of measurement value of density of acquired gas
1007 time history of output target value
1008 required specification of output target value
1009 alert display unit
1010 button
1011 output target value
1012 configuration of gas separation device
1013 provided gas value
1016 operation status
1020 management screen
1021 display device

**Claims**

1. A gas separation system comprising:

    a plurality of gas separation devices; and
    a gas separation system management unit connected to the plurality of gas separation devices,
    wherein each of the gas separation devices includes:
    a gas acquisition unit that is a pipe configured to acquire a mixed gas containing hydrogen gas from a pipeline through which the mixed gas flows;
    a gas separation unit including a separation membrane allowing hydrogen gas to permeate therethrough, and configured to separate a gas to be used by a consumer and a gas to be returned to the pipeline from the mixed gas using the separation membrane;
    a gas supply unit that is a pipe configured to supply the consumer with the gas to be used by the consumer, the gas being separated from the mixed gas by the gas separation unit;
    a gas discharge unit that is a pipe configured to discharge the gas to be returned to the pipeline, the gas being separated from the mixed gas by the gas separation unit; and
    a measuring instrument installed in at least one pipe among the gas acquisition unit, the gas supply unit, and the gas discharge unit, and configured to measure a physical quantity of the gas flowing through the installed pipe,
    wherein the gas separation system management unit stores information about the consumer and has an output item configured according to the type and application of the gas to be used by the consumer,
    wherein the output item is a physical quantity of the gas output from the gas separation device, and
    wherein the measuring instrument is installed at a different location and measures a different output item depending on the type and application of the gas to be used by the consumer.

2. The gas separation system according to claim 1,

    wherein the gas separation unit includes a permeation part in which hydrogen gas that has permeated through the separation membrane is present and a non-permeation part in which a gas that has not permeated through the separation membrane is present, and
    the mixed gas contains natural gas, and
    wherein, for the consumer who uses natural gas,
    the output item is a heat quantity,
    the gas supply unit is connected to the non-permeation part,
    the gas discharge unit is connected to the permeation part, and
    the measuring instrument is a calorimeter installed in the gas supply unit.

**3.** The gas separation system according to claim 1,

wherein the gas separation unit includes a permeation part in which hydrogen gas that has permeated through the separation membrane is present and a non-permeation part in which a gas that has not permeated through the separation membrane is present, and
wherein, for a consumer who uses the mixed gas,
the output item is a heat quantity,
one of the gas supply unit and the gas discharge unit is connected to the permeation part, and the other is connected to the non-permeation part, and
the measuring instrument is a calorimeter installed in the gas supply unit, the gas discharge unit, and the gas acquisition unit.

**4.** The gas separation system according to claim 1,

wherein the gas separation unit includes a permeation part in which hydrogen gas that has permeated through the separation membrane is present and a non-permeation part in which a gas that has not permeated through the separation membrane is present, and
wherein, for the consumer who uses hydrogen gas,
the output item is a density or a carbon dioxide concentration,
the gas supply unit is connected to the permeation part,
the gas discharge unit is connected to the non-permeation part, and
the measuring instrument is a densitometer or a carbon dioxide concentration meter installed in the gas supply unit.

**5.** The gas separation system according to claim 1,
wherein the gas separation system management unit includes a display device, and calculates a concentration of hydrogen flowing through the gas supply unit using a density or a carbon dioxide concentration of the gas flowing through the gas supply unit, which has been measured by the measuring instrument, and displays the calculated concentration of hydrogen on the display device.

**6.** The gas separation system according to claim 4,

wherein each of the gas separation devices includes a control unit, and
when a value of the output item measured by the measuring instrument exceeds a specification required by the consumer, the control unit changes a pressure or a flow rate of the gas to increase an amount of hydrogen gas permeating the separation membrane so as to increase a hydrogen concentration of the gas to be supplied to the consumer.

**7.** The gas separation system according to claim 1,

wherein each of the gas separation devices includes a control unit,
the gas acquisition unit includes a calorimeter, a densitometer, or a carbon dioxide concentration meter as the measuring instrument,
the control unit changes a flow rate or a pressure of at least one of the gas flowing through the gas acquisition unit, the gas flowing through the gas supply unit, and the gas flowing through the gas discharge unit so that a value of the output item becomes a prescribed value, and
the control unit sets a magnitude of change per unit time of the gas of which the flow rate or the pressure is changed, based on a magnitude of change per unit time of a measurement value of the measuring instrument installed in the gas acquisition unit.

## FIG. 1A

## FIG. 1B

EP 4 772 265 A1

# FIG. 2

# FIG. 3

GAS VOLUME FLOW RATE (a.u.)

BEFORE SEPARATION

AFTER PERMEATING THROUGH FIRST-STAGE SEPARATION MEMBRANE

AFTER PERMEATING THROUGH SECOND-STAGE SEPARATION MEMBRANE

H2    CH4    CO2    N2    C2H6    C3H8

# FIG. 4

GAS SEPARATION SYSTEM

| EXCEEDING | STOP OPERATION | ✕ |

| CONSUMER TYPE | USE OF HYDROGEN RAW MATERIAL |
|---|---|
| PROVIDED GAS TYPE | HYDROGEN GAS |
| OUTPUT ITEM | DENSITY |

0. 591 kg/m3

0.184 kg/m3

ESTIMATED HYDROGEN CONCENTRATION : 95 vol%

# FIG. 5

1020

INTEGRATED MANAGEMENT SCREEN FOR
GAS SEPARATION SYSTEM

| | GAS SEPARATION DEVICE 5a | GAS SEPARATION DEVICE5b | GAS SEPARATION DEVICE5c | ... |
|---|---|---|---|---|
| CONSUMER TYPE | NATURAL GAS FUEL | HYDROGEN RAW MATERIAL | MIXED GAS FUEL | |
| PROVIDED GAS TYPE | NATURAL GAS | HYDROGEN | MIXED GAS | |
| OUTPUT ITEM | HEAT QUANTITY | DENSITY | HEAT QUANTITY | |
| OUTPUT TARGET VALUE | 43 MJ/m3 OR MORE | 0.184 kg/m3 OR LESS | 35 – 40 MJ/m3 | |
| ESTIMATED HYDROGEN CONCENTRATION | --- | 95 % | --- | |
| CONFIGURATION | | | | |
| PROVIDED GAS VALUE | 45 MJ/m3 | 0.190 Kg/m3 | 38 MJ/m3 | |
| OPERATION STATUS | OPERATION | EXCEEDING | OPERATION | |

**INTERNATIONAL SEARCH REPORT**

| International application No. |
|---|
| **PCT/JP2024/022767** |

**A.    CLASSIFICATION OF SUBJECT MATTER**

***B01D 53/22***(2006.01)i; ***C01B 3/56***(2006.01)i
FI:    B01D53/22; C01B3/56 Z

According to International Patent Classification (IPC) or to both national classification and IPC

**B.    FIELDS SEARCHED**

Minimum documentation searched (classification system followed by classification symbols)

B01D53/22; C01B3/56; F17D1/02; F17D3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2002-243100 A (TOKYO GAS CO., LTD.) 28 August 2002 (2002-08-28)<br>claims, paragraphs [0031]-[0044], [0051]-[0053], fig. 1-4 | 1-7 |
| Y | WO 2022/230124 A1 (HITACHI, LTD.) 03 November 2022 (2022-11-03)<br>claims, paragraphs [0034], [0038], fig. 1-8 | 1-7 |
| Y | JP 2002-213695 A (TOKYO GAS CO., LTD.) 31 July 2002 (2002-07-31)<br>claims, paragraphs [0034], [0040], fig. 2 | 1-7 |
| Y | JP 2003-028398 A (TOKYO GAS CO., LTD.) 29 January 2003 (2003-01-29)<br>claims, paragraphs [0027]-[0030], fig. 4 | 1-7 |
| Y | JP 2021-091617 A (KABUSHIKI KAISHA TOYOTA CHUO KENKYUSHO) 17 June 2021 (2021-06-17)<br>claims, paragraph [0038], fig. 1 | 4-7 |

☐ Further documents are listed in the continuation of Box C.          ☑ See patent family annex.

| | |
|---|---|
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **04 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/022767**

| Patent document cited in search report | | | Publication date (day/month/year) | Patent family member(s) | Publication date (day/month/year) |
|---|---|---|---|---|---|
| JP | 2002-243100 | A | 28 August 2002 | (Family: none) | |
| WO | 2022/230124 | A1 | 03 November 2022 | EP 4332427 A1 claims, paragraphs [0043], [0049], fig. 1-8 | |
| JP | 2002-213695 | A | 31 July 2002 | (Family: none) | |
| JP | 2003-028398 | A | 29 January 2003 | (Family: none) | |
| JP | 2021-091617 | A | 17 June 2021 | (Family: none) | |

Form PCT/ISA/210 (patent family annex) (July 2022)

**EP 4 772 265 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002213695 A